# EUROPEAN PATENT SPECIFICATION

(11) **EP 3 059 998 B1**
(45) Date of publication and mention of the grant of the patent: **25.03.2020**
(21) Application number: 14794796.4
(22) Date of filing: 08.05.2014
(51) Int. Cl.: H04W 28/08, H04L 1/00, H04W 92/20

(54) **RESOURCE STATUS OBTAINING METHOD, APPARATUS, SYSTEM AND COMPUTER STORAGE MEDIUM**
VERFAHREN FÜR DEN ERHALT EINES RESSOURCENSTATUS, VORRICHTUNG, SYSTEM UND COMPUTERSPEICHERMEDIUM
PROCÉDÉ, APPAREIL, SYSTÈME ET SUPPORT DE STOCKAGE INFORMATIQUE D'OBTENTION DE L'ÉTAT D'UNE RESSOURCE

(30) Priority: 18.10.2013 CN 201310495205
(43) Date of publication of application: 24.08.2016
(73) Proprietor: ZTE Corporation, Shenzhen, Guangdong 518057 (CN)
(72) Inventor: GENG, Tian, Shenzhen Guangdong 518057 (CN)
(74) Representative: Ligi, Stefano
(86) International application number: PCT/CN2014/077065
(87) International publication number: WO 2014/180330

(56) References cited:
- EP-A1- 2 337 395
- EP-A1- 2 416 605
- WO-A1-2011/149081
- CN-A- 101 610 537
- CN-A- 102 131 237
- CN-B- 102 056 240
- US-A1- 2006 251 013
- US-A1- 2011 249 642
- LTE: 'X2 application protocol (X2 AP)' 3GPP TS 36.423 V10.7.0 30 September 2013, page 24, XP050915189
- LTE: 'X2 application protocol (X2 AP' 3GPP TS 36.423 V10.7.0 30 September 2013, XP050915189

## Description

### TECHNICAL FIELD

The present disclosure relates to an information acquisition technology in the field of mobile communications, and more particularly, to a resource state acquisition method, device and system, and a computer storage medium.

### BACKGROUND

In a Long Term Evolution (LTE) communication technology, a resource state report is introduced to implement load balance between Evolved Node Bases (eNBs). Specifically, a resource state report is introduced to enable adjacent eNBs to interact about respective load conditions, thereby transferring a load suitable to be transferred in a load balance source eNB which is the eNB with a higher load to a load transfer target eNB which is the eNB with a lower load to further implement load balance.

In a resource state report acquisition process in the related art, when part or all of requested resources are available, a responding eNB sends a resource state response message to a requesting eNB, and the requesting eNB performs subsequent load balance decision making according to the response message.

In a process of implementing load balance, some resources in resources requested by a requesting eNB are basic resources required by load balance, while some resources are optional; when a responding eNB does not have the basic resources, an effect of load balance of the requesting eNB to the responding eNB may be very poor or balance may even not be implemented.

In the related art, when a responding eNB may not provide part or all of basic resources and may provide a part of optional resources, the responding eNB may still return a resource state response message to a requesting eNB, so that the requesting eNB may continue executing load balance decision making and a load of the requesting eNB may further be increased.

Document US2011/0249642 A1 discloses adaptive resource negotiation between base stations for enhanced interference coordination.

Document CN102056240A discloses an inter-cell load balancing method a base station. The method includes: the first cell and the second cell are neighbor cells, the first base station is a service base station of the first cell, and the second base station is a service base station of the second cell; the first base station sends resource state request message for requesting a resource state report of the second cell to the second base station; if the second cell is in a high load state, the second base station estimates the time T required for recovering the second cell to a normal load state after receiving the resource state request message; the second base station sends the estimated time T to the first base station; and the first base station acquires that the second cell is in the high load state according to the received estimated time T, and takes the time T as a time basis for resending the resource state request message. According to the technical scheme, unnecessary resource waste can be avoided.

### SUMMARY

In view of this, embodiments of the present disclosure are intended to provide a resource state acquisition method, device and system, and a computer storage medium, which can avoid a load of a requesting eNB being further increased under the condition that a responding eNB cannot provide basic resources.

The features of the method,the device, the system and the computer storage medium according to the present disclosure are defined in the independent claims, and the preferable features according to the present invention are defined in the dependent claims.

The resource state acquisition method, device and system and computer-storage medium in the embodiment of the present disclosure have the following beneficial effects:
according to the resource state acquisition method, device and system and computer storage medium in the embodiment of the present disclosure, the first eNB which serves as a requesting eNB adds the basic resource information to the resource state report request message, the second eNB which serves as a responding eNB judges whether the second eNB may provide the basic resources required by the first eNB at first after receiving the request message, and if the basic resources may not be provided, the second eNB directly sends the resource state failure message, and does not perform the subsequent steps. Compared with a conventional method, the method in the embodiment of the present disclosure has the advantages that the problem that an expected effect in load balance of the first eNB may not be achieved and a load is increased by implementation of resource state acquisition and load balance work instead due to the fact that the second eNB still sends the resource state response message to the first eNB when the basic resources may not be provided is completely solved, and meaningless operation during resource state acquisition of the second eNB is also avoided.

### BRIEF DESCRIPTION OF THE DRAWINGS

Fig. 1 is a flowchart of a resource state acquisition method according to embodiment 1 of the present disclosure;
Fig. 2a is a first bitmap corresponding to requested resource type information according to embodiment 2 of the present disclosure;
Fig. 2b is a second bitmap corresponding to basic resource information according to embodiment 2 of the present disclosure;
Fig. 3 is a flowchart of a resource state acquisition method according to embodiment 3 of the present disclosure;
Fig. 4 is a flowchart of a resource state acquisition method according to embodiment 4 of the present disclosure;
Fig. 5 is a structure diagram of a resource state acquisition device according to embodiment 5 of the present disclosure; and
Fig. 6 is a structure diagram of a resource state acquisition system according to embodiment 6 of the present disclosure.

### DETAILED DESCRIPTION

Preferred embodiments of the present disclosure will be described below with reference to the drawings in detail, and it should be understood that the preferred embodiments described below are only adopted to describe and explain the present disclosure and not intended to limit the present disclosure.

### Embodiment 1

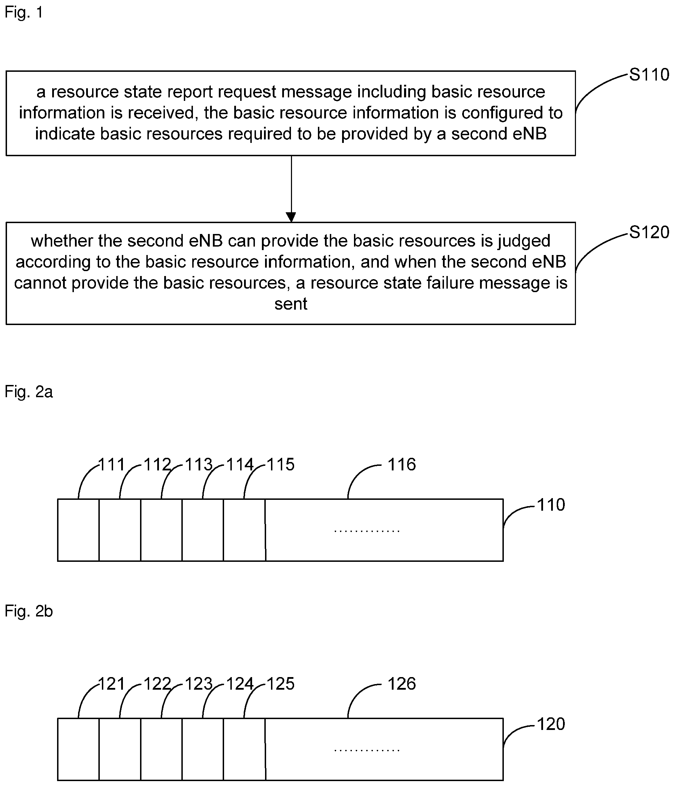

As shown in Fig. 1, a resource state acquisition method in this embodiment includes:
Step 110: a resource state report request message including basic resource information is received, the basic resource information is configured to indicate basic resources required to be provided by a second eNB; and
Step 120: whether the second eNB can provide the basic resources is judged according to the basic resource information, when the second eNB cannot provide the basic resources, a resource state failure message is sent from the the second eNB.

In step 110, the resource state report request message may be sent by a first eNB, or by management or relay equipment (specifically network management equipment, for example) which acquires the resource state report request message of the first eNB.

In step 120, an execution main body for judging whether the second eNB can provide the basic resources may be the second eNB, or network management equipment which manages the second eNB; and any one of conventional methods can be adopted for specific judgment. Specifically, for example: the second eNB makes statistics about current resource usage of the second eNB, calculates resources which can be provided by using difference calculation of all resources and the current resource usage or a preset function relationship, and then judges whether a requirement on the basic resources is met to further implement judgment about whether the corresponding basic resources can be provided.

In step 120, the resource state failure message can be pre-stored, or dynamically generated; and the second eNB may directly send the resource state failure message to the first eNB which serves as a requester, and the resource state failure message may also be sent to relay or control equipment which may send information to the first eNB, and then is sent to the first eNB through the relay or control equipment. The relay or control equipment is specifically, for example, network management equipment.

Compared with the conventional method, the resource state acquisition method in this embodiment has the advantages that whether the second eNB which serves as a responder can provide the basic resources required by the first eNB which serves as the requester in the resource state acquisition method is judged at first; if NO, the second eNB may directly send the resource state failure message to the first eNB through an air interface, so that the condition that the first eNB which serves as the requester continues performs load balance decision making due to the fact that the second eNB sends a resource state response message when the basic resources cannot be provided is completely eradicated, and a load of the first eNB is further reduced; and in addition, the condition that the second eNB still judges whether all requested resources can be provided in the state that the second eNB cannot provide all of the basic resources is avoided, so that the resource state acquisition method is synchronously rationalized.

In addition, when it is determined that the second eNB can provide all the basic resources required by the first eNB in step 120, the steps of the conventional resource state acquisition method can be continuously executed, thereby further implementing acquisition of a resource state of the second eNB.

In this embodiment, the basic resources may be any one or multiple of physical resources, transport network layer load resources, hardware load resources, blank subframes and composite available resources. That the basic resources are specifically which one of the resources can be determined according to a type of the load of the first eNB to be balanced to the second eNB.

### Embodiment 2

A resource state acquisition method in this embodiment includes that:
a resource state report request message including basic resource information is received, the basic resource information is configured to indicate basic resources required to be provided by a second eNB; and
whether the second eNB can provide the basic resources is judged according to the basic resource information; and
when the second eNB cannot provide the basic resources, a resource state failure message is sent.

In a specific implementation process, the basic resource information added in the resource state report request message may be described through various forms of data structures; in this embodiment, in order to achieve higher compatibility with the related art, representation of the basic resource information is simplified as much as possible in a manner as follows:
the resource state report request message further includes requested resource type information; the requested resource type information is configured to represent requested resources required to be provided by the second eNB; and the basic resource information is indication information which indicates whether each requested resource is a basic resource.

There are multiple implantation modes for both the requested resource type information and the basic resource information. In this embodiment, the indication information is adopted to indicate whether the requested resources are the basic resources in combination with the requested resource type information in the related art, so that the resource state report request message is simplified, appearance of the indication information for the same requested resource twice in the resource state report request message is avoided, a data volume of the resource state report request message is further reduced, a data structure of an existing resource state report request message is changed less, and convenience and feasibility are achieved.

According to the combined representation method for the requested resource type information and the basic resource information in this embodiment, there are multiple specific implementation modes, in this embodiment, a preferred combined representation method for the requested resource type information and the basic resource information is further disclosed, specifically as follows:
the requested resource type information is a first bitmap;
the basic resource indication information is a second bitmap of which a bit number is equal to that of the first bitmap; and
the second bitmap marks bits corresponding to the basic resources according to a preset mapping relationship with the first bitmap.

Specifically, Fig. 2a shows a first bitmap 110 corresponding to the requested resource type information; the first bitmap includes a plurality of bits, specifically 32 bits or 64 bits, for example; and one bit or a combination of multiple bits in the first bitmap indicates whether a resource is a requested resource.

In this embodiment, a first bit 111 is configured to indicate a physical resource is a requested resource; a second bit 112 is configured to indicate whether a transport network layer load resource is a requested resource; a third bit 113 is configured to indicate whether a hardware load resource is a requested resource; a fourth bit 114 is configured to indicate whether a composite available resource is a requested resource; and a fifth bit 115 is configured to indicate whether a blank subframe is a requested resource. The reference sign 116 represents indication of a left bit about whether another resource is a requested resource.

When any bit in bits 111 to 116 is marked to be 1, it is indicated that a resource corresponding to the bit is a requested resource, otherwise the resource corresponding to the bit is a non-requested resource; when the corresponding bit is marked to be 0, it is indicated that the resource corresponding to the bit is a requested resource, otherwise the resource corresponding to the bit is a non-requested resource. Which one of the two indication manners is to be adopted may specifically be set according to a requirement.

Specifically, Fig. 2b shows the second bitmap 120 corresponding to the basic resource information; the second bitmap 120 and the first bitmap 110 are bitmaps including the same number of bits. One bit or a combination of multiple bits in the first bitmap indicates whether a resource is a requested resource, while one bit or a combination of multiple bits in the second bitmap is configured to indicate whether a requested resource is a basic resource; in this embodiment, a first bit 121 is configured to indicate whether a physical resource is a basic resource; a second bit 122 is configured to indicate whether a transport network layer load resource is a basic resource; a third bit 123 is configured to indicate whether a hardware load resource is a basic resource; a fourth bit 124 is configured to indicate whether a composite available resource is a basic resource; and a fifth bit 125 is configured to indicate whether a blank subframe is a basic resource. The reference sign 126 represents indication of a left bit about whether another resource is a requested resource.

When any bit in bits 121 to 126 is marked to be 1, it is indicated that a requested resource corresponding to the bit is a basic resource, otherwise the resource corresponding to the bit is a non-basic resource; or when the corresponding bit is marked to be 0, it is indicated that the requested resource corresponding to the bit is a basic resource, otherwise the resource corresponding to the bit is a non-basic resource. Which one of the two indication manners is to be adopted may specifically be set according to a requirement.

In this embodiment, the preset mapping relationship adopted between the first bitmap 110 and the second bitmap 120 is a one-to-one corresponding relationship of bits at the same position, and in a specific implementation process, another function relationship (such as a hash function) may also be adopted to represent the mapping relationship. However, the mapping relationship in this embodiment is simple and clear, and is easy to implement because the related art is changed less.

### Embodiment 3

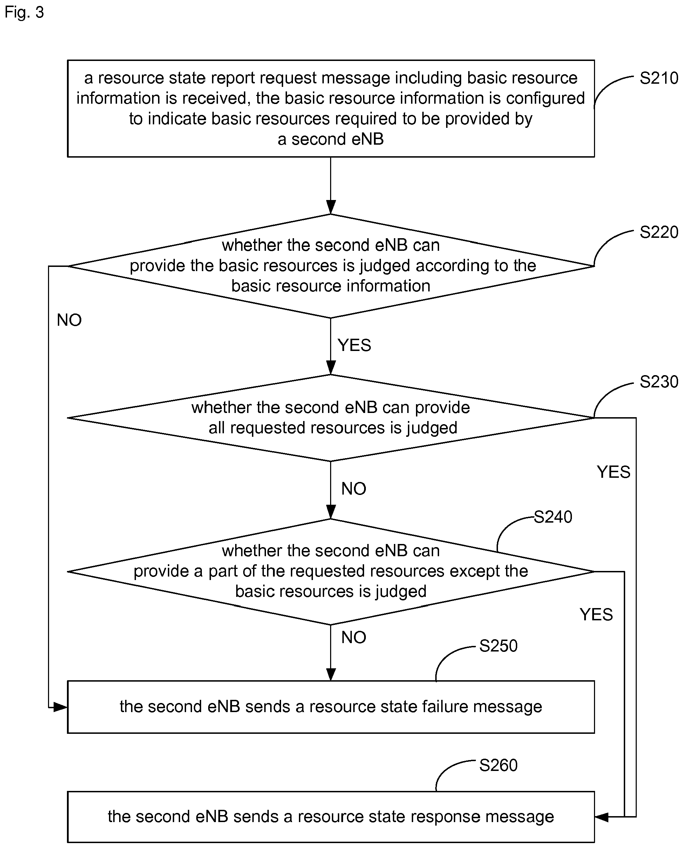

As shown in Fig. 3, a resource state acquisition method in this embodiment includes:
Step 210: a resource state report request message including basic resource information is received, the basic resource information is configured to indicate basic resources required to be provided by a second eNB;
Step 220: hether the second eNB can provide the basic resources is judged according to the basic resource information, step 230 is executed if YES, otherwise, step 250 is executed;
Step 230: whether the second eNB can provide all requested resources required in the resource state report request message is judged, step 240 is executed if NO, otherwise, step 260 is executed;
Step 240: whether the second eNB can provide a part of the requested resources except the basic resources is judged, step 260 is executed if YES, otherwise, step 250 is executed. In a specific implementation process, before step 240 is executed, the method further includes that whether an "indication about that a part of measurement objects are allowed to be successfully acquired" is contained in the resource state report request message is judged, the measurement objects corresponds to the requested resources, step 240 is executed only when the "indication about that a part of the measurement objects are allowed to be successfully acquired" is included and allowing is indicated, otherwise the flow is ended or another corresponding flow is executed;
Step 250: the second eNB sends a resource state failure message; and
Step 260: the second eNB sends a resource state response message.

The resource state report request message received in step 210 may be from a first eNB which serves as a requester;
an execution main body in step 250 and step 260 may be the second eNB which serves as a responder; and the resource state failure message and the resource state response message may be directly sent to the first eNB which serves as the requester.

In this embodiment, whether the second eNB can provide the basic resources is judged at first in step 220, then step 230 and step 240 are sequentially executed, otherwise step 250 is directly executed, thereby effectively solving the problem that a load of the first eNB is further increased under the condition that the first eNB cannot implement load balance due to the fact that judgment about whether a part of the requested resources can be provided is directly made and the resource state response message is further sent to the first eNB.

In embodiment 1 to embodiment 3, the method may further include that: after the first eNB receives the resource state message sent by the second eNB, the resource state acquisition flow is ended or another failure processing step or another processing step is executed. Compared with a conventional method, the resource state acquisition methods in embodiment 1 to embodiment 3 have the advantages that judgment about whether the eNB which serves as the responder may provide the basic resources is added, so that the resource state acquisition flow may be timely ended when the eNB which serves as the responder cannot provide the basic resources, the resource state acquisition method is optimized, and more importantly, the problem that the load of the eNB which serves as the requester is further increased due to the fact that the eNB which serves as the requester still performs load balance decision making when the eNB which serves as the responder cannot provide the basic resources is solved.

### Embodiment 4

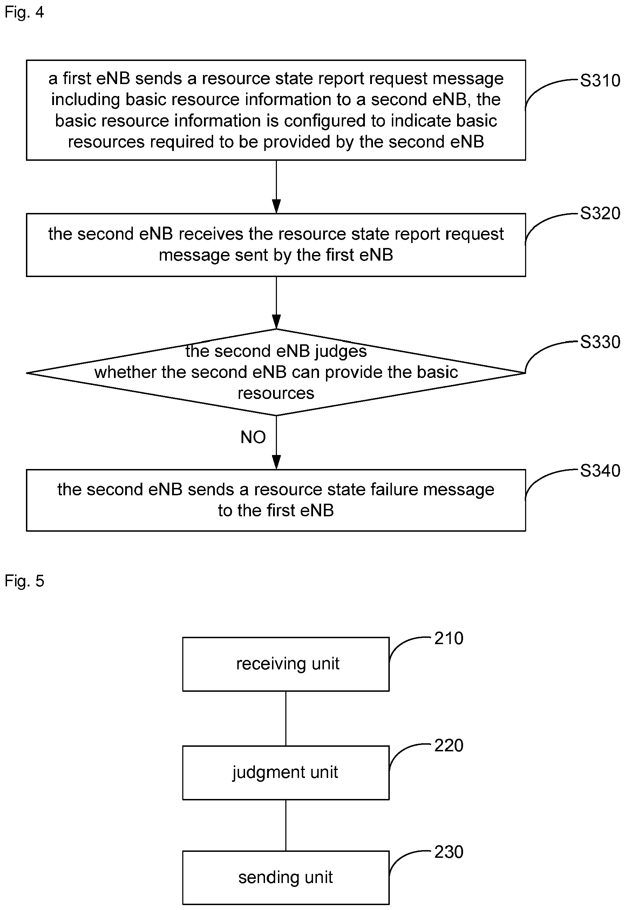

As shown in Fig. 4, this embodiment provides a resource state acquisition method, which includes:
Step 310: a first eNB sends a resource state report request message including basic resource information to a second eNB, the basic resource information is configured to indicate basic resources required to be provided by the second eNB;
Step 320: the second eNB receives the resource state report request message sent by the first eNB;
Step 330: the second eNB judges whether the second eNB can provide the basic resources according to the resource state report request message; and
Step 340: when it is determined that the second eNB cannot provide the basic resources in step 330 (that is, a judgment result is NO), the second eNB sends a resource state failure message to the first eNB.

In this embodiment, the basic resources may be any resources required by load balance, and may specifically be any one or multiple of physical resources, transport network layer load resources, hardware load resources, blank subframes and composite available resources.

In addition, when it is determined that the second eNB can provide the basic resources for the first eNB in step 330, steps of a conventional resource state acquisition method may be continuously executed, thereby further implementing acquisition of a resource state of the second eNB.

Compared with a resource state report request message in the related art, the resource state report request message in the resource state acquisition method in this embodiment is added with the basic resource information. here may be multiple methods for adding the basic resource information, and an example will be provided below.

According to the example, resources required by each load type may be predefined into basic resources according to the types of loads to be balanced. Therefore, when the resource state report request message is formed, the basic resource information is read from a corresponding storage medium according to a load type.

The basic resource information is added, and judgment about whether the eNB which serves as a responder can provide the basic resources is made at first when the second eNB subsequently judges whether requested resources can be provided, thereby avoiding the condition that the first eNB continues performing load balance decision making according to a response message due to the fact that the second eNB still sends the resource state response message to the first eNB under the condition that the second eNB cannot provide the basic resources. If the first eNB performs load balance decision making under the abovementioned condition, an expected effect in load balance cannot be achieved or load balance cannot be implemented, and on the contrary, a load of the first eNB is increased, thereby going against an original intention of performing resource state acquisition to implement load balance and reduce the load of the first eNB.

### Embodiment 5

As shown in Fig. 5, this embodiment provides a resource state acquisition device, which includes:
a receiving unit 210, configured to receive a resource state report request message, the resource state report request message includes basic resource information, and the basic resource information is configured to indicate basic resources required to be provided by a second eNB;
a judgment unit 220, configured to judge whether the second eNB can provide the basic resources; and
a sending unit 230, configured to, when the second eNB cannot provide the basic resources, send a resource state failure message.

The receiving unit 210 may include an air interface. The resource state report request message may be sent by a first eNB which serves as a requester.

A specific structure of the judgment unit 220 may be an electronic component such as a comparator and a combination of signal processing components of a comparator, an amplifier and the like, and may also be a processor which runs software realizing a corresponding function. The processor may be a single-chip microcomputer and a digital signal processor, and may also be a programmable array, a central processing unit or the like.

The sending unit 230 may be a wired or wireless sending device, specifically a sending antenna, for example. The resource state failure message may be preset information, and may also be dynamically generated information. When the resource state failure message is only simple failure prompting information, it may be preset and stored, and if the resource state failure message further includes reason analysis information for that the second eNB cannot provide corresponding requested resources, it may be selected to be dynamically generated. If the resource state failure message is statically pre-stored, the resource state acquisition device may further include a storage medium or a data interface which reads the resource state failure message from external equipment. If the resource state failure message is dynamically generated, the resource state acquisition device may further include a resource state failure message generation unit.

The resource state acquisition device in this embodiment may be integrated in a device on the second eNB to form a part of the second eNB, and may also be a device independent of the second eNB and connected with the second eNB in a wired or wireless connection manner; and a specific structure may be set as required. In this embodiment, the resource state acquisition device is preferably integrated on the second eNB.

In order to simplify the resource state report request message and avoid appearance of reference information of the same requested resource for multiple times, this embodiment makes a further improvement for the condition, and the resource state report request message further includes requested resource type information; the requested resource type information is configured to indicate requested resources required to be provided by the second eNB; and
the basic resource information is indication information which indicates whether each requested resource is a basic resource.

In this embodiment, the basic resource information is indication information corresponding to each requested resource, and is convenient to implement, and the related art is improved less.

Furthermore, on the basis of the structure, a specific implementation mode for simplifying the resource state report request message is provided, but is not limited to the following implementation mode:
the requested resource type information is a first bitmap;
the basic resource indication information is a second bitmap of which a bit number is equal to that of the first bitmap; and
the second bitmap marks bits corresponding to the basic resources according to a preset mapping relationship with the first bitmap.

The preset mapping relationship may be a sequential corresponding relationship of bits at the same position, and may also adopt a function relationship for cross mapping, and sequential mapping of the first bitmap and the second bitmap is preferably adopted in a specific implementation process. With adoption of sequential mapping, the mapping relationship is clear and convenient to implement.

In this embodiment, the basic resources are any one of all the requested resources, and specifically, the basic resources are any one or combination of multiple of physical resources of physical resource blocks, transport network layer load resources, hardware load resources, blank subframes and composite available resources.

In this embodiment, the resource state acquisition device is configured to acquire a resource state report for load balance, and may effectively avoid the condition that the second eNB sends the resource state response message to the first eNB under the condition that it does not have the basic resources requested by the first eNB, thereby effectively solving the problem that the first eNB cannot transfer a load to the second eNB and the load of the first eNB is further increased by resource state acquisition and load balance due to the fact that the first eNB performs load balance decision making under the condition that the second eNB cannot provide the required basic resources.

### Embodiment 6

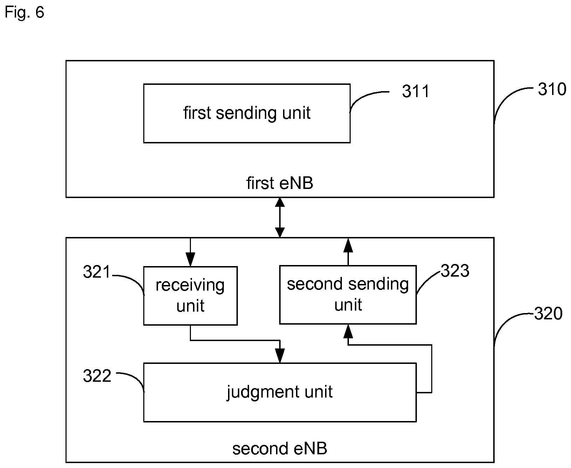

As shown in Fig. 6, this embodiment provides a resource state acquisition system, which includes a first eNB 310 and a second eNB 320, wherein
the first eNB 310 is configured to send a resource state report request message including basic resource information, and the basic resource information is configured to indicate basic resources required to be provided by the second eNB;
the second eNB 320 is configured to receive the resource state report request message, judge whether the second eNB can provide the basic resources, and send a resource state failure message to the first eNB when the second eNB cannot provide the basic resources.

The first eNB and the second eNB may be connected through a wireless network, and may perform data transmission through transceiver antennae.

Specifically, the first eNB 310 includes a first sending unit 311; the second eNB 320 includes a receiving unit 321, a judgment unit 322 and a second sending unit 323;
the first sending unit 311 is configured to send the resource state report request message to the receiving unit 321; the resource state report request message includes the basic resource information; the basic resource information is configured to indicate the basic resources required to be provided by the second eNB;
the receiving unit 321 is configured to receive the resource state report request message sent by the first sending unit 311;
the judgment unit 322 is configured to judge whether the second eNB can provide the basic resources; and
the second sending unit 323 is configured to send the resource state failure message to the first eNB when the second eNB cannot provide the basic resources.

When the resource state failure message is pre-stored, the second eNB may further include a storage unit. When the resource state failure message is dynamically generated, the second eNB may further include a resource state failure message generation unit.

According to the resource state acquisition system in this embodiment, the resource state report request message sent by the first sending unit 311 of the first eNB 310 includes the basic resource information, and the judgment unit is added to the second eNB 320 to judge whether the second eNB 320 can provide the required basic resources in the basic resource information, thereby solving the problem that a load of the first eNB 310 is further increased by a load transfer processing failure during resource state acquisition.

This embodiment of the present disclosure further provides a computer storage medium, in which computer-executable instructions are stored, the computer-executable instructions are configured to execute the resource state acquisition method adopting any technical solution in embodiment 1 to embodiment 4. The computer storage medium may specifically be a non-flash storage medium such as a U disk, a compact disc and a Digital Video Disk (DVD).

The above is only the preferred embodiment of the present disclosure and not intended to limit the scope of protection of the present disclosure. All modifications made according to the principle of the present disclosure shall be understood to fall within the scope of protection of the present disclosure.

## Claims

1. A resource state acquisition method comprising :
receiving (S110) a resource state report request message including basic resource information from a first Evolved Node Base called a first eNB, the basic resource information being configured to indicate basic resources required to be provided by a second eNB, and the basic resources being resources required by load balance; and
judging (S120) whether the second eNB can provide the basic resources according to the basic resource information, and when the second eNB cannot provide the basic resources, sending a resource state failure message to the first eNB;
and wherein the resource state report request message further comprises requested resource type information; the requested resource type information is configured to represent requested resources required to be provided by the second eNB; and the basic resource information is indication information which indicates whether each requested resource is a basic resource.

2. The resource state acquisition method according to claim 1, wherein
the requested resource type information is a first bitmap (110);
the basic resource indication information is a second bitmap (120) of which a bit number is equal to that of the first bitmap; and
the second bitmap (120) marks bits corresponding to the basic resources according to a preset mapping relationship with the first bitmap (110).

3. The resource state acquisition method according to claim 1 or 2, wherein the basic resources are any one or multiple of physical resources, transport network layer load resources, hardware load resources, blank subframes and composite available resources.

4. A resource state acquisition device comprising :
a receiving unit (210), configured to receive a resource state report request message including basic resource information from a first Evolved Node Base called a first eNB, wherein the basic resource information is configured to indicate basic resources required to be provided by a second eNB, and the basic resources are resources required by load balance;
a judgment unit (220), configured to judge whether the second eNB can provide the basic resources according to the basic resource information; and
a sending unit (230), configured to, when the second eNB cannot provide the basic resources, send a resource state failure message to the first eNB;
and wherein the resource state report request message further comprises requested resource type information; the requested resource type information is configured to represent requested resources required to be provided by the second eNB; and
the basic resource information is indication information which indicates whether each requested resource is a basic resource.

5. The resource state acquisition device according to claim 4, wherein the requested resource type information is a first bitmap (110); and the basic resource indication information is a second bitmap (120) of which a bit number is equal to that of the first bitmap; and
the second bitmap marks bits corresponding to the basic resources according to a preset mapping relationship with the first bitmap.

6. The resource state acquisition device according to any one of claims 4 to 5, wherein the basic resources are any one or multiple of physical resources, transport network layer load resources, hardware load resources, blank subframes and composite available resources.

7. A resource state acquisition system comprising :
a first Evolved Node Base, called a first eNB (310), configured to send a resource state report request message including basic resource information, wherein the basic resource information is configured to indicate basic resources required to be provided by a second eNB, and the basic resources are resources required by load balance;
the second eNB (320), configured to receive the resource state report request message, judge whether the second eNB can provide the basic resources, and send a resource state failure message to the first eNB when the second eNB cannot provide the basic resources;
and wherein the resource state report request message further comprises requested resource type information; the requested resource type information is configured to represent requested resources required to be provided by the second eNB;
and the basic resource information is indication information which indicates whether each requested resource is a basic resource.

8. The resource state acquisition system according to claim 7, wherein
the requested resource type information is a first bitmap (110);
the basic resource indication information is a second bitmap (120) of which a bit number is equal to that of the first bitmap; and
the second bitmap (120) marks bits corresponding to the basic resources according to a preset mapping relationship with the first bitmap.

9. The resource state acquisition system according to any one of claims 7 to 8, wherein the basic resources are any one or multiple of physical resources, transport network layer load resources, hardware load resources, blank subframes and composite available resources.

10. A computer storage medium, in which a computer-executable instruction is stored, that when executed by a computer, cause the computer to perform the method according to any one of claims 1 to 3.

## Patentansprüche

1. Verfahren zur Erfassung eines Ressourcenzustands, umfassend:
Empfangen (S110) einer Anforderungsnachricht eines Ressourcenzustandsberichts, die Grundressourceninformationen umfasst, von einer ersten Evolved-Node-Basis, die als erste eNB bezeichnet wird, wobei die Grundressourceninformationen dafür ausgelegt sind, Grundressourcen anzuzeigen, die von einer zweiten eNB geliefert werden müssen, und die Grundressourcen Ressourcen sind, die von Lastausgleich gefordert werden; und
Beurteilen (S120), ob die zweite eNB die Grundressourcen gemäß den Grundressourceninformationen liefern kann, und wenn die zweite eNB die Grundressourcen nicht liefern kann, Senden einer Ressourcenzustands-Fehlschlagnachricht an die erste eNB;
und worin die Ressourcenzustandsberichts-Anforderungsnachricht ferner angeforderte Ressourcentyp-Informationen umfasst; die angeforderten Ressourcentyp-Informationen dafür ausgelegt sind, angeforderte Ressourcen darzustellen, die von der zweiten eNB geliefert werden müssen; und die Grundressourceninformationen Anzeigeinformationen sind, die anzeigen, ob jede angeforderte Ressource eine Grundressource ist.

2. Verfahren zur Erfassung eines Ressourcenzustands nach Anspruch 1, worin die angeforderten Ressourcentypinformationen eine erste Bitmap (110) sind;
die Grundressourcen-Anzeigeinformationen eine zweite Bitmap (120) sind, von der eine Bitanzahl derjenigen der ersten Bitmap gleich ist; und
die zweite Bitmap (120) Bits, die den Grundressourcen entsprechen, gemäß einer vorgegebenen Zuordnungsbeziehung mit der ersten Bitmap (110) markiert.

3. Verfahren zur Erfassung eines Ressourcenzustands nach Anspruch 1 oder 2, worin die Grundressourcen irgendeine oder mehrere von physikalischen Ressourcen, Transportnetzwerkschicht-Lastressourcen, Hardware-Lastressourcen, leeren Unterrahmen und zusammengesetzten verfügbaren Ressourcen sind.

4. Vorrichtung zur Erfassung eines Ressourcenzustands, umfassend:
eine Empfangseinheit (210), die dafür ausgelegt ist, eine Anforderungsnachricht eines Ressourcenzustandsberichts, die Grundressourceninformationen umfasst, von einer ersten Evolved-Node-Basis, die als erste eNB bezeichnet wird, zu empfangen, wobei die Grundressourceninformationen dafür ausgelegt sind, Grundressourcen anzuzeigen, die von einer zweiten eNB geliefert werden müssen, und die Grundressourcen Ressourcen sind, die von Lastausgleich gefordert werden;
eine Beurteilungseinheit (220), die dafür ausgelegt ist, zu beurteilen, ob die zweite eNB die Grundressourcen gemäß den Grundressourceninformationen liefern kann; und
eine Sendeeinheit (230), die dafür ausgelegt ist, wenn die zweite eNB die Grundressourcen nicht liefern kann, eine Ressourcenzustands-Fehlschlagnachricht an die erste eNB zu senden;
und worin die Ressourcenzustandsberichts-Anforderungsnachricht ferner angeforderte Ressourcentyp-Informationen umfasst; die angeforderten Ressourcentyp-Informationen dafür ausgelegt sind, angeforderte Ressourcen darzustellen, die von der zweiten eNB geliefert werden müssen; und
die Grundressourceninformationen Anzeigeinformationen sind, die anzeigen, ob jede angeforderte Ressource eine Grundressource ist.

5. Vorrichtung zur Erfassung eines Ressourcenzustands nach Anspruch 4, worin die angeforderten Ressourcentypinformationen eine erste Bitmap (110) sind; und
die Grundressourcen-Anzeigeinformationen eine zweite Bitmap (120) sind, von der eine Bitanzahl derjenigen der ersten Bitmap gleich ist; und
die zweite Bitmap Bits, die den Grundressourcen entsprechen, gemäß einer vorgegebenen Zuordnungsbeziehung mit der ersten Bitmap markiert.

6. Vorrichtung zur Erfassung eines Ressourcenzustands nach einem der Ansprüche 4 bis 5, worin die Grundressourcen irgendeine oder mehrere von physikalischen Ressourcen, Transportnetzwerkschicht-Lastressourcen, Hardware-Lastressourcen, leeren Unterrahmen und zusammengesetzten verfügbaren Ressourcen sind.

7. System zur Erfassung eines Ressourcenzustands, umfassend:
eine erste Evolved-Node-Basis, die als erste eNB (310) bezeichnet wird, die dafür ausgelegt ist, eine Anforderungsnachricht eines Ressourcenzustandsberichts, die Grundressourceninformationen umfasst, zu senden, wobei die Grundressourceninformationen dafür ausgelegt sind, Grundressourcen anzuzeigen, die von einer zweiten eNB geliefert werden müssen, und die Grundressourcen Ressourcen sind, die von Lastausgleich gefordert werden;
die zweite eNB (320), die dafür ausgelegt ist, die Anforderungsnachricht eines Ressourcenzustandsberichts zu empfangen, zu beurteilen, ob die zweite eNB die Grundressourcen liefern kann, und eine Ressourcenzustands-Fehlschlagnachricht an die erste eNB zu senden, wenn die zweite eNB die Grundressourcen nicht liefern kann;
und worin die Ressourcenzustandsberichts-Anforderungsnachricht ferner angeforderte Ressourcentyp-Informationen umfasst; die angeforderten Ressourcentyp-Informationen dafür ausgelegt sind, angeforderte Ressourcen darzustellen, die von der zweiten eNB geliefert werden müssen; und
die Grundressourceninformationen Anzeigeinformationen sind, die anzeigen, ob jede angeforderte Ressource eine Grundressource ist.

8. System zur Erfassung eines Ressourcenzustands nach Anspruch 7, worin
die angeforderten Ressourcentypinformationen eine erste Bitmap (110) sind;
die Grundressourcen-Anzeigeinformationen eine zweite Bitmap (120) sind, von der eine Bitanzahl derjenigen der ersten Bitmap gleich ist; und
die zweite Bitmap (120) Bits, die den Grundressourcen entsprechen, gemäß einer vorgegebenen Zuordnungsbeziehung mit der ersten Bitmap markiert.

9. System zur Erfassung eines Ressourcenzustands nach einem der Ansprüche 7 bis 8, worin die Grundressourcen irgendeine oder mehrere von physikalischen Ressourcen, Transportnetzwerkschicht-Lastressourcen, Hardware-Lastressourcen, leeren Unterrahmen und zusammengesetzten verfügbaren Ressourcen sind.

10. Computerspeichermedium, in dem eine computerausführbare Anweisung gespeichert ist, die, wenn sie von einem Computer ausgeführt wird, den Computer veranlasst, das Verfahren nach einem der Ansprüche 1 bis 3 durchzuführen.

## Revendications

1. Méthode d'acquisition d'état de ressources comprenant :
la réception (S110) d'un message de requête de rapport d'état de ressources comprenant des informations de ressources de base d'une première base de nœud évolué appelée un premier eNB, les informations de ressources de base étant configurées pour indiquer les ressources de base devant être fournies par un deuxième eNB, et les ressources de base étant des ressources requises par l'équilibrage de charge ; et
le jugement (S 120) si le deuxième eNB peut fournir les ressources de base selon les informations de ressources de base, et lorsque le deuxième eNB ne peut pas fournir les ressources de base, l'envoi d'un message d'échec d'état de ressources au premier eNB ;
et où le message de requête de rapport d'état de ressources comprend en outre des informations de type de ressources requises ; les informations de type de ressources requises sont configurées pour représenter les ressources requises qui doivent être fournies par le deuxième eNB ;
et les informations de ressources de base sont des informations d'indication qui indiquent si chaque ressource requise est une ressource de base.

2. Méthode d'acquisition d'état de ressources selon la revendication 1, où les informations de type de ressources requises sont un premier bitmap (110) ;
les informations d'indication de ressources de base sont un deuxième bitmap (120) dont un nombre de bits est égal à celui du premier bitmap ; et
le deuxième bitmap (120) marque les bits correspondant aux ressources de base selon une relation de mappage prédéfinie avec le premier bitmap (110).

3. Méthode d'acquisition d'état de ressources selon la revendication 1 ou 2, où les ressources de base sont l'une quelconque des ou plusieurs ressources physiques, ressources de charge de la couche réseau de transport, ressources de charge matérielle, sous-trames vierges et ressources disponibles composites.

4. Dispositif d'acquisition d'état de ressources comprenant :
une unité de réception (210) configurée pour recevoir un message de requête de rapport d'état de ressources comprenant des informations de ressources de base d'une première base de nœud évolué appelée un premier eNB, où les informations de ressources de base sont configurées pour indiquer les ressources de base devant être fournies par un deuxième eNB, et les ressources de base sont des ressources requises par l'équilibrage de charge ; et
une unité de jugement (220), configurée pour juger si le deuxième eNB peut fournir les ressources de base selon les informations de ressources de base ; et
une unité d'envoi (230), configurée pour, lorsque le deuxième eNB ne peut pas fournir les ressources de base, envoyer un message d'échec d'état de ressources au premier eNB ;
et où le message de requête de rapport d'état de ressources comprend en outre des informations de type de ressources requises ; les informations de type de ressources requises sont configurées pour représenter les ressources requises qui doivent être fournies par le deuxième eNB ; et
les informations de ressources de base sont des informations d'indication qui indiquent si chaque ressource requise est une ressource de base.

5. Dispositif d'acquisition d'état de ressources selon la revendication 4, où les informations de type de ressources requises sont un premier bitmap (110) ; et
les informations d'indication de ressources de base sont un deuxième bitmap (120) dont un nombre de bits est égal à celui du premier bitmap ; et
le deuxième bitmap marque les bits correspondant aux ressources de base selon une relation de mappage prédéfinie avec le premier bitmap.

6. Dispositif d'acquisition d'état de ressources selon l'une quelconque des revendications de 4 à 5, où les ressources de base sont l'une quelconque des ou plusieurs ressources physiques, ressources de charge de la couche réseau de transport, ressources de charge matérielle, sous-trames vierges et ressources disponibles composites.

7. Système d'acquisition d'état de ressources comprenant :
une première base de nœud évolué, appelée un premier eNB (310), configurée pour envoyer un message de requête de rapport d'état de ressources comprenant des informations de ressource de base, où les informations de ressources de base sont configurées pour indiquer les ressources de base devant être fournies par un deuxième eNB, et le les ressources de base sont les ressources requises par l'équilibrage de charge ;
le deuxième eNB (320), configuré pour recevoir le message de requête de rapport d'état de ressources, juge si le deuxième eNB peut fournir les ressources de base et envoie un message d'échec d'état de ressources au premier eNB lorsque le deuxième eNB ne peut pas fournir les ressources de base ;
et où le message de requête de rapport d'état de ressources comprend en outre des informations de type de ressources requises ; les informations de type de ressources requises sont configurées pour représenter les ressources requises qui doivent être fournies par le deuxième eNB ; et
les informations de ressources de base sont des informations d'indication qui indiquent si chaque ressource requise est une ressource de base.

8. Système d'acquisition d'état de ressources selon la revendication 7, où les informations de type de ressources requises sont un premier bitmap (110) ;
les informations d'indication de ressources de base sont un deuxième bitmap (120) dont un nombre de bits est égal à celui du premier bitmap ; et
le deuxième bitmap (120) marque les bits correspondant aux ressources de base selon une relation de mappage prédéfinie avec le premier bitmap.

9. Système d'acquisition d'état de ressources selon l'une quelconque des revendications de 7 à 8, où les ressources de base sont l'une quelconque des ou plusieurs ressources physiques, ressources de charge de la couche réseau de transport, ressources de charge matérielle, sous-trames vierges et ressources disponibles composites.

10. Support de stockage informatique, où sont stockées des instructions exécutables par ordinateur, qui lorsqu'elles sont exécutées par un ordinateur, fait en sorte que l'ordinateur exécute la méthode selon l'une quelconque des revendications de 1 à 3.
